# NEUE EUROPÄISCHE PATENTSCHRIFT

(11) **EP 1 790 504 B2**
(45) Veröffentlichungstag und Bekanntmachung des Hinweises auf die Entscheidung über den Einspruch: **30.07.2014**
(45) Hinweis auf die Patenterteilung: 15.10.2008
(21) Anmeldenummer: 06016788.9
(22) Anmeldetag: 11.08.2006
(51) Int. Cl.: B60D 1/54

(54) **Antriebseinheit für eine Anhängerkupplung**
Drive unit for a trailer coupling
Unité d'entraînement pour un attelage de remorque

(30) Priorität: 25.11.2005 DE 102005056217
(43) Veröffentlichungstag der Anmeldung: 30.05.2007
(73) Patentinhaber: Scambia Holdings Cyprus Limited, 3106 Limassol (CY)
(72) Erfinder: Hachadorian, Gary, 63934 Röllbach (DE)
(74) Vertreter: Hoeger, Stellrecht & Partner Patentanwälte

(56) Entgegenhaltungen:
- EP-A- 1 024 036
- EP-A- 1 557 299
- EP-A- 1 637 364
- EP-A1- 1 504 928
- EP-A2- 1 084 871
- WO-A1-03/072375
- DE-A1- 10 004 523
- DE-A1- 10 017 013
- DE-A1- 10 243 045
- DE-A1- 19 612 961
- DE-A1- 19 711 535
- FR-A- 2 227 739
- FR-A1- 2 450 167

## Beschreibung

Die Erfindung betrifft eine Antriebseinheit für eine Anhängerkupplung gemäß dem Oberbegriff des Anspruchs 1 mit einer um eine Schwenkachse zwischen einer Betriebsstellung und einer Ruhestellung verschwenkbaren Kugelstange, wobei die Antriebseinheit über eine Antriebswelle antreibbar ist und eine Verriegelung der Anhängerkupplung zumindest in der Betriebsstellung aufweist, welche in der verriegelten Stellung in einen an der Antriebseinheit angeordneten Kopf der schwenkbaren Kugelstange eingreift.

Neben starr montierten und abnehmbaren Anhängerkupplungen setzen sich auf dem Markt zunehmend schwenkbare Anhängerkupplungen durch, die für den Gebrauch in eine Betriebsstellung geschwenkt und nach dem Gebrauch in eine Ruhestellung zurück geschwenkt werden können, wobei die Anhängerkupplungen in der Ruhestellung in einen Ruhestellungsraum hinter dem Stoßfänger bzw. der Stoßfängerverkleidung eines Pkw aufgenommen werden. Dies hat den Vorteil, dass die Anhängerkupplung bei Nichtgebrauch nicht nach hinten von dem Fahrzeug vorsteht und beschädigt werden bzw. Beschädigungen verursachen kann.

Eine derartige Anhängerkupplung ist beispielsweise aus der gattungsbildenden DE 100 04 523 A1 bekannt. Bei der beschriebenen Anhängerkupplung ist ein Kupplungsarm zwischen einer von dem Stoßfänger des Fahrzeug verdeckten Nichtgebrauchsstellung und einer freiliegenden Gebrauchsstellung verstellbar. Dabei führt der Kupplungsarm zunächst eine Senkbewegung, anschließend eine Rotation und darauf folgend wieder eine Hubbewegung aus. Für die Hub- bzw. Senkbewegung und die Drehbewegung sind jeweils separate Antriebe notwendig, da die Bewegungsrichtungen orthogonal zueinander sind. Dies verteuert die Anhängerkupplung, erhöht deren Gewicht und vergrößert den benötigten Einbauraum.

Aus der DE 196 12 961 A1 ist eine schwenkbare Anhängerkupplung bekannt, deren Schwenkachse derart schräg zu der Fahrzeughauptachse ausgerichtet ist, so dass die Anhängerkupplung an dem Stoßfänger vorbei zwischen einer Ruhestellung und einer Gebrauchsstellung verschwenkbar ist. Für die Schwenkbewegung ist ein elektromotorischer Antrieb vorgesehen, der über ein Getriebe auf den Kugelhals einwirkt. Sowohl die Montage als auch der Betrieb eines derartigen Antriebs mit einem an dem einen Ende des Kugelhalses angreifenden Getriebes ist jedoch schwierig. Bei der Justage müssen die Anhängerkupplung und der Antriebsmotor sehr genau aufeinander ausgerichtet werden, damit die Getriebe sauber ineinander greifen. Andernfalls kommt es aufgrund der Reibung in dem Getriebe häufig zu Betriebsstörungen, die auch dann auftreten können, wenn das freiliegende Getriebe während der Benutzung verschmutzt wird. Neben einem aufwendigen Einbau ist es daher auch während des Betriebs des Kraftfahrzeugs immer wieder notwendig, das Getriebe zu reinigen. Ferner kann es nötig sein, das Getriebe nach Beschädigungen durch einen Steinschlag auszutauschen, weil die Getrieberitzel beschädigt sind und sich die Kugelstange nicht mehr zuverlässig aus der Betriebsstellung in die Ruhestellung bzw. umgekehrt bewegen lässt.

Eine als Klinke ausgebildete Verriegelung soll den Kugelhals in der Gebrauchsstellung zusätzlich sichern. Dazu rastet die Klinke an einen an dem Kugelhals ausgebildeten Vorsprung ein und kann manuell oder elektromotorisch wieder gelöst werden. Allerdings ist auch die Verriegelung nach außen offen und kann durch Steinschlag oder dgl. beschädigt oder in ihrer Funktion bspw. durch ein Festklemmen eines Steins beeinträchtigt werden. Außerdem nimmt die Verriegelung durch die einrastende Klinke einen Teil der auf die Kugelstange einwirkenden Betriebslast auf. Dies kann auf die Dauer zu Beschädigungen oder zu einen ungewollten Spiel in der Verriegelungseinrichtung führen.

Die nach veröffentlichte EP 1 637 364 A1 beschreibt eine Anhängerkupplung mit einem Schwenkantrieb, der mittels einer Antriebswelle mit einem daran festgelegten Dorn eine Kugelstange verschwenkt. Zur Verriegelung der Kugelstange in ihrer Ruhestellung und ihrer Betriebsstellung ist ein Gestänge mit Verriegelungsstiften vorgesehen, die in den Kopf der Kugelstange eingreifen. Dazu sind die Verriegelungsstifte rechtwinklig zu der Abtriebswelle angeordnet und werden zum Ver- und Entriegeln in radialer Richtung zu der Antriebswelle bewegt. Die Merkmale des Oberbegriffs des Anspruchs 1 sind aus der EP 1 024 036 A1 bekannt

Aufgabe der vorliegenden Erfindung ist es, eine Antriebseinheit für eine Anhängerkupplung vorzusehen, die kompakt aufgebaut ist, ohne großen Aufwand montiert werden kann und im Betrieb keine häufige Wartung erfordert.

Diese Aufgabe wird durch eine Antriebseinheit mit den Merkmalen des Anspruchs 1 gelöst. Dazu weist die Verriegelung mindestens zwei Verriegelungsstifte auf, wobei die Verriegelungsstifte und die Schwenkachse winklig zueinander angeordnet sind. Daher sind die kraftaufnehmenden Achsen der Schwenkachse und der Verrieglungsstifte in unterschiedliche Richtungen ausgerichtet und nehmen daher verschieden wirkende Kräfte auf. Die Verriegelungsstifte verhindern lediglich ein Verdrehen der Kugelstange durch ein Blockieren der Drehbewegung. Da sie jedoch winklig zu der Drehachse angeordnet sind, werden Betriebslasten im Anhängerbetrieb im Wesentlichen nicht über die Verriegelungsstifte bzw. den Verriegelungsmechanismus abgeleitet, so dass die Verriegelung nicht durch von außen wirkende Kräfte beansprucht wird und daher nahezu wartungsfrei ist. Insbesondere führen keine auf die Verriegelung einwirkenden Kräfte zu einem unterwünschten Spiel in dem Verriegelungsmechanismus, das die Verriegelungswirkung unter Umständen beeinträchtigten könnte. Daher kann die Verriegelung auch mit entsprechend feinen Bauteilen ausgeführt werden, weil keine Kräfte durch einen massiven Aufbau der Verriegelung aufgenommen werden müssen. Diese kann daher sehr kompakt mit in die Antriebseinheit integriert werden. Ferner sind die Antriebswelle und die Schwenkachse winklig zueinander angeordnet. Dies ist sinnvoll, weil die Anhängerkupplung ausschließlich durch die Schwenkbewegung um eine Achse zwischen der Betriebsstellung und der Ruhestellung verstellt wird, und der Winkel der Schwenkachse so eingerichtet werden muss, dass die in der Regel in der Grundform u-förmig gebogene Kugelstange während der Schwenkbewegung unter dem Stoßfänger bzw. der Stoßfängerverkleidung hindurchtaucht.

Zur Verriegelung sind zwei Verriegelungsstifte in den Kopf der Kugelstange einführbar ausgebildet sein. Durch diese erfindungsgemäße Ausgestaltung wird die Verdrehsicherung der Kugelstange gegen ein unbeabsichtigtes Verschwenken dadurch erreicht, dass die Schwenkachse durch das Einführen der Verriegelungsstifte mittels Verkeilen blockiert wird, ohne dass die Verriegelungsstifte in ihrer Bewegungsrichtung Kraft aufnehmen müssen.

Dies lässt sich konstruktiv besonders vorteilhaft erreichen, wenn die Verriegelungsstifte ihrer Axialrichtung bewegbar ausgebildet sind und ihre Bewegungsrichtung zu der Schwenkachse winklig ist. In dieser Anordnung kann die Verriegelung ein unbeabsichtigtes Verstellen der Anhängerkupplung während des Zugbetriebs eines Anhängers zuverlässig verhindern.

Um auch die Ruhestellung der Anhängerkupplung zu sichern, kann die Antriebseinheit zusätzlich eine Verriegelung der Anhängerkupplung in der Ruhestellung aufweisen. Diese ist vorzugsweise derart konstruiert, dass dieselbe Verriegelung für die Betriebsstellung und die Ruhestellung wirkt. Die Verriegelung kann in der bzw. jeder verriegelten Stellung der Anhängerkupplung erfindungsgemäß in den an der Antriebseinheit angeordneten Kopf der schwenkbaren Kugelstange eingreifen, beispielsweise indem verschiebbare Stifte in entsprechende Verriegelungsöffnungen in den Kopf der schwenkbaren Kugelstange einführbar sind. Dadurch wird ein unbeabsichtigtes Verschwenken der Kugelstange um die Schwenkachse in jeder Endstellung zuverlässig verhindert.

Die Verriegelung kann erfindungsgemäß durch die Antriebswelle mit betätigt werden, so dass die Bedienung der verschwenkbaren Anhängerkupplung für den Benutzer besonders einfach wird. Dies kann insbesondere dadurch erreicht werden, dass ein Verriegelungsstift durch ein Gestänge mit Knebeln verschiebbar ausgebildet ist. Durch das Gestänge kann die Antriebskraft der Antriebswelle bspw. mittels einer geeigneten Nutführung auf die Verriegelungsstifte zu deren Verschiebung übertragen werden. In der umgekehrten Richtung wird durch die Knebel verhindert, dass eine auf die Verriegelungsstifte einwirkende Kraft zu einer Verschiebung der Verriegelungsstifte führt, die nicht durch die Antriebswelle eingeleitet wird.

In einer möglichen Ausgestaltung der erfindungsgemäßen Verriegelung kann ein Verriegelungsstift in seiner Verriegelungsrichtung durch eine Feder vorgespannt sein. Durch eine geeignete Führung bspw. des Gestänges kann der Verriegelungsstift dann in einer entriegelten Position gehalten werden, bis der Kopf der Kugelstange in seiner Endposition angeordnet ist, in der die Verriegelungsstifte in den Kopf der Kugelstange eingreifen können. Dann wird der Verriegelungsstift freigegeben und durch die Feder in die Verriegelungsposition gedrückt. Zur Entriegelung wird der Verriegelungsstift durch eine geeignete Führung von der Antriebswelle angetrieben gegen die Kraft der Feder aus seiner Verriegelungsposition in eine Entriegelungsposition gezogen.

Eine besonders zuverlässige Verriegelung lässt sich erreichen, wenn zwei Verriegelungsstifte in der Verriegelung vorgesehen sind, die vorzugsweise parallel angetrieben werden. Dazu kann je ein Verriegelungsstift auf einer Seite der Schwenkachse angeordnet sein.

Damit die Antriebswelle gleichzeitig die Schwenkachse und die Verriegelung antreiben kann, ist es vorteilhaft, wenn die Antriebswelle und die Schwenkachse mittels eines Kopplungssystems entkoppelbar ausgebildet sind. Nach einer Entkopplung von Antriebswelle und Schwenkachse, insbesondere wenn die Kugelstange ihre jeweilige Endposition (Ruhestellung oder Betriebsstellung) erreicht hat, kann die Verriegelung dann durch eine Weiterbetätigung der Antriebswelle auf einfache Weise betätigt werden.

Dabei kann das Kopplungssystem eine zweite, zusätzliche Verriegelung für die Kugelstange in ihrer oder ihren Endposition(en) aufweisen, um eine redundante Sicherheit zu gewährleisten. Die zweite Verriegelung kann bspw. in Form eines Hebels ausgebildet sein, der die Antriebswelle und eine Schwenkachse zur Kraftübertragung koppelt und entkoppelt. In der gekoppelten Stellung ist die Schenkachse dann nicht ohne ein Verdrehen der Antriebswelle möglich. Letztere ist jedoch im Nicht-Betrieb üblicher Weise blockiert, so dass das Kopplungssystem als zweite Verriegelung wirkt.

Um eine hohe Flexibilität bei dem Aufbau der Antriebseinheit zu erhalten, kann in der Antriebseinheit eine Welle zur Kraftübertragung auf die Anhängerkupplung vorgesehen sind, wobei die Welle eine Gelenkwelle oder eine biegsame Welle ist. Eine derartige Welle ist im Gegensatz zu einem Getriebe nicht auf eine exakte Ausrichtung relativ zu der Antriebswelle angewiesen, weil eine flexible Welle an der Antriebswelle mit gewissen Freiheitsgraden in der Ausrichtung ankoppeln kann, um die Kraftübertragung auf die Schwenkachse der Anhängerkupplung zu erreichen. Dies erleichtert nicht nur die Montage der Antriebseinheit zum Antreiben der Anhängerkupplung, sondern ermöglicht es auch, die Antriebseinheit relativ zu der Anhängerkupplung in verschiedenen Positionen anzuordnen und das Gesamtkupplungssystem bestehend aus Antriebseinheit und Anhängerkupplung damit an den in dem jeweiligen Kraftfahrzeug vorhandenen Einbauraum anzupassen. Auch arbeitet eine Gelenkwelle oder eine biegsame Welle verschleißfreier als ein Getriebe, das häufiger nachgefettet werden muss. Grundsätzlich lässt sich der erfindungsgemäße Aufbau jedoch auch mit einem Getriebe realisieren.

Bei dem Aufbau mit einer flexiblen Welle zur Kraftübertragung in der Antriebseinheit können durch das Kopplungssystem insbesondere die Antriebswelle mit der Welle zur Kraftübertragung entkoppelbar ausgebildet sein. Dann kann die Antriebswelle von der Welle zur Kraftübertragung der Anhängerkupplung jeweils zu Beginn und/oder zum Ende des Verstellweges entkoppelt werden. Durch Drehen der Antriebswelle wird somit zunächst eine Entriegelung der Anhängerkupplung erreicht. Anschließend verbindet das Kopplungssystem die Antriebswelle mit der Welle zur Kraftübertragung und bewirkt das gewünschte Verschwenken der Anhängerkupplung. Sobald diese ihre Endstellung erreicht hat, löst das Kopplungssystem die Verbindung zwischen der Antriebswelle und der Welle zur Kraftübertragung, so dass durch ein Weiterdrehen der Antriebswelle eine Verriegelung der Anhängerkupplung in der Endstellung erreicht wird. Dabei ist die Antriebswelle mit der Welle zur Kraftübertragung also entkoppelbar ausgebildet, um eine Bewegung der Antriebswelle nicht in jedem Fall, sondern gesteuert auf die Welle zur Kraftübertragung auf die Anhängerkupplung zu übertragen. Dazu kann ein zwischen der Antriebswelle und der Welle zur Kraftübertragung wirksames Kopplungssystem mit einer Drehsperre und/oder Mitnehmern vorgesehen sein, die beispielsweise durch eine mit der Antriebswelle mitbewegte Kurvensteuerung entsprechend geführt werden. Dadurch ist es möglich, die Drehung der Antriebswelle neben der Verdrehung der Welle zur Kraftübertragung auf die Anhängerkupplung auch anderweitig zu verwenden, insbesondere für die Verriegelung.

Erfindungsgemäß kann die Kugelstange um die Schwenkachse drehbar an dem Gehäuse der Antriebseinheit befestigt sein, wobei die Befestigung vorzugsweise derart ausgebildet ist, dass die an der Anhängerkupplung angreifende Kraft von dem Gehäuse der Antriebseinheit aufgenommen wird, ohne dass diese Kraft auf den Antriebsmechanismus zum Verschwenken der Kugelstange und/oder die Verriegelung einwirkt. Daher übernehmen erfindungsgemäß weder der Antrieb noch eine in der Antriebseinheit vorgesehene Verriegelung einen Anteil der Betriebslast der Anhängerkupplung.

Aufgrund der in der Antriebseinheit flexibel anordenbaren Welle zur Kraftübertragung auf die Anhängerkupplung ist es möglich, dass die Welle zur Kraftübertragung und insbesondere auch die Verriegelung in einem gemeinsamen, abgedichteten Gehäuse angeordnet werden. Dieses Gehäuse kann so kompakt ausgebildet sein, dass es einfach in den in einem Pkw typischerweise vorhandenen Einbauraum für die Anhängerkupplung einsetzbar ist. Durch das abgedichtete Gehäuse ist der Antrieb der Anhängerkupplung zuverlässig vor Verschmutzungen und Beschädigungen geschützt, so dass die erfindungsgemäße Antriebseinheit im Wesentlichen wartungsfrei ist.

Zusätzlich ist es besonders vorteilhaft, wenn die Kugelstange an der Antriebseinheit mit einer Wellendichtung abgedichtet ist, so dass die in der Antriebseinheit vorgesehene Welle zur Kraftübertragung durch das Gehäuse der Antriebseinheit durchtreten und unmittelbar an der Kugelstange der Anhängerkupplung bspw. durch Verschrauben angreifen kann. In einer bevorzugten Ausgestaltung ist die Wellendichtung unter einem an dem der Antriebseinheit zugewandten Ende der Kugelstange vorgesehenen Kopf angeordnet, so dass die Wellendichtung selbst vor Beschädigungen geschützt ist und sich beispielsweise mit der Kugelstange auf der Gehäuseoberfläche mitdreht.

Die erfindungsgemäße Antriebseinheit mit der als Gelenkwelle oder biegsame Welle ausgebildeten flexiblen Welle zur Kraftübertragung auf die Anhängerkupplung ermöglicht es insbesondere, die Antriebswelle unter Verwendung derselben Antriebseinheit sowohl manuell als auch elektromotorisch anzutreiben, da der für das Verschwenken notwendige Kraftaufwand nur gering ist und die Betriebslastübertragung der Anhängerkupplung nicht auf das Antriebs- und/oder Verriegelungssystem wirkt. Vorzugsweise ist der Antrieb derart eingestellt, dass bei einer Drehung der Antriebswelle um 360° das Verschwenken der Kugelstange und ggf. die Ver- und Entriegelung der Kugelstange in den Endpositionen erreicht wird. Dies ist insbesondere für einen manuellen Antrieb vorteilhaft, da die jeweiligen Endstellungen einfach zu erkennen sind.

Weitere Merkmale, Vorteile und Anwendungsmöglichkeiten der Erfindung ergeben sich auch aus der nachfolgenden Beschreibung eines Ausführungsbeispiels anhand der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: eine dreidimensionale Ansicht der erfindungsgemäßen Antriebseinheit mit einer Anhängerkupplung in Arbeitsstellung;
- Fig. 2: eine dreidimensionale Ansicht der Antriebseinheit mit der Anhängerkupplung in Ruhestellung;
- Fig. 3: eine Seitenansicht wesentlicher Teile des erfindungsgemäßen Antriebsmechanismus der Antriebseinheit in einer ersten Position;
- Fig. 4: eine Seitenansicht wesentlicher Teile des erfindungsgemäßen Antriebsmechanismus der Antriebseinheit in einer zweiten Position;
- Fig. 5: eine dreidimensionale Ansicht des Kopplungssystems der Antriebseinheit;
- Fig. 6: eine dreidimensionale Teilansicht des Kopplungssystems gemäß Fig. 5
- Fig. 7: eine dreidimensionale Teilansicht einer Variante des Verriegelungssystems und
- Fig. 8: die Verriegelungsführung gemäß Fig. 7 in einer Seitenansicht.

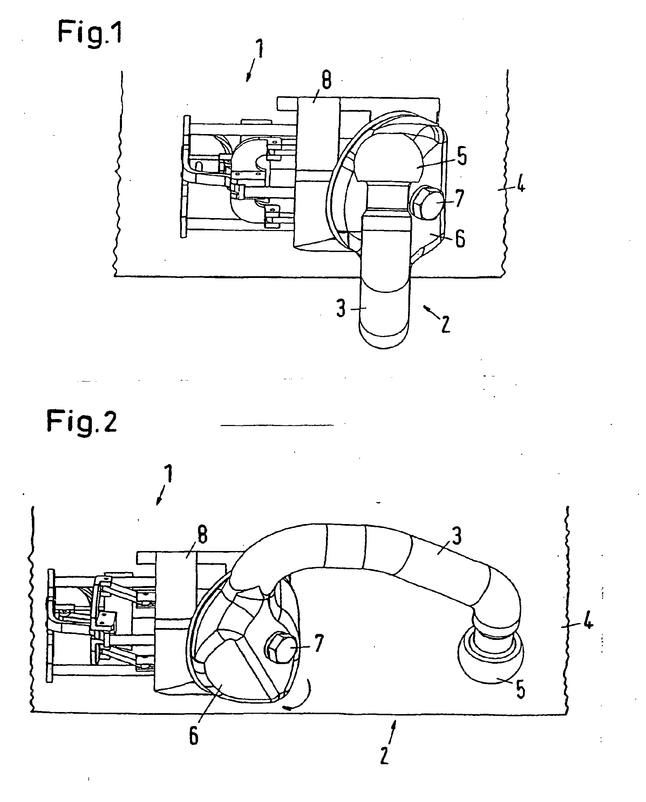

Fig. 1 zeigt eine an einem Kraftfahrzeug montierte Antriebseinheit 1 mit einer daran angeordneten Anhängerkupplung 2 in der Arbeitsstellung, in der eine verschwenkbare Kugelstange 3 unter einem Stoßfänger 4 eines Kraftfahrzeugs hindurchragt und nach hinten von dem Kraftfahrzeug vorsteht, um einen nicht dargestellten Anhänger an die an dem einen Ende der Kugelstange 3 vorgesehene Kupplungskugel 5 anzukoppeln.

Fig. 2 zeigt dieselbe Antriebseinheit 1 mit einer in die Ruhestellung verschwenkten Anhängerkupplung 2, in der die Kugelstange 3 und die Kupplungskugel 5 von dem Stoßfänger 4 des Fahrzeugs verdeckt sind. Wie Fig. 2 zu entnehmen, ist die Kugelstange 3 in der Grundform u-förmig gebogen und derart angepasst, dass die Kugelstange 3 mit der Kupplungskugel 5 durch eine in Richtung des Pfeils angedeutete Drehbewegung unter dem Stoßfänger 4 durchschwenkt, um in die in Fig. 1 dargestellte Arbeitsstellung zu gelangen.

Antriebsseitig ist die Kugelstange 3 fest mit einem Kopf 6 der Anhängerkupplung 2 verbunden, der um eine Schwenkachse 7 relativ zu dem teilweise offen dargestellten Gehäuse 8 der Antriebseinheit 1 verdreht werden kann. Dadurch wird das Verschwenken der Anhängerkupplung 2 zwischen der Ruhestellung und der Betriebsstellung bewirkt.

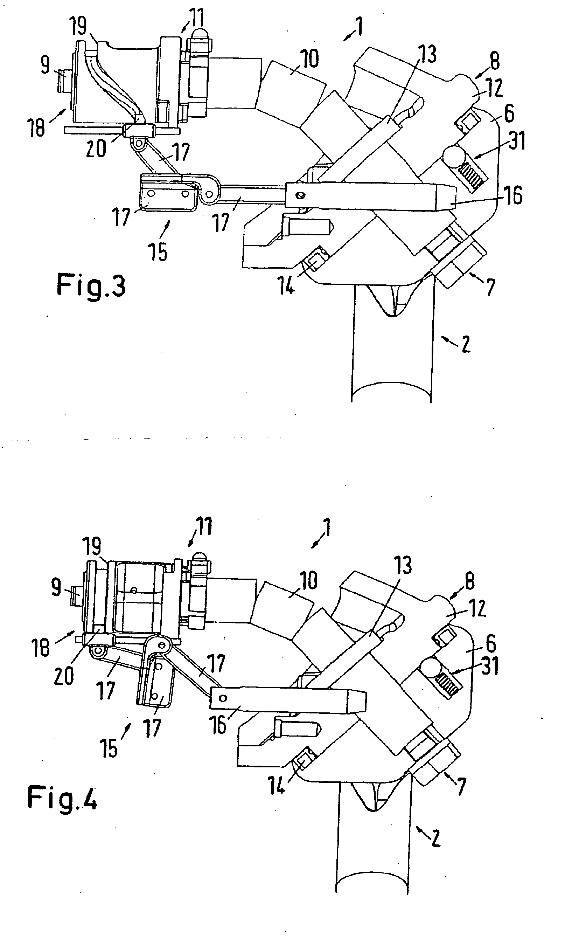

Zur Erläuterung des Antriebsmechanismus der Antriebseinheit 1 sind in den Fig. 3 und 4 wesentliche Teile des Antriebsmechanismus der Antriebseinheit 1 in zwei verschiedenen Positionen dargestellt. Die Antriebseinheit 1 weist eine nach außen führende Antriebswelle 9 auf, mit der die Antriebseinheit 1 von außen manuell oder elektromotorisch antreibbar ist. In der Antriebseinheit 1 ist ferner eine mit der Antriebswelle 9 koppelbare Welle 10 zur Kraftübertragung auf die Anhängerkupplung 2 vorgesehen, die als Gelenkwelle ausgebildet ist. In dem dargestellten Beispiel ist die Gelenkwelle 10 eine Doppelgelenkwelle. Anstelle einer Gelenkwelle könnte die Welle 10 jedoch auch als biegsame Welle ausgebildet sein.

Die Gelenkwelle 10 ist an dem Kopf 6 der Anhängerkupplung 2 bspw. durch Verschrauben festgelegt und mit diesem verdrehbar in dem Gehäuse 8 gelagert. Auf der dem Kopf 6 gegenüber liegenden Seite der Gelenkwelle 10 ist diese über ein später im Detail beschriebenes Kopplungssystem 11 mit der Antriebswelle 9 koppelbar.

Der Kopf 6 der Anhängerkupplung 2 liegt an einer dafür vorgesehenen Außenfläche eines Befestigungsteils 12 des in Fig. 3 nicht vollständig dargestellten Gehäuses 8 der Antriebseinheit 1 an. Das Befestigungsteil 12 ist massiv ausgebildet und kann beispielsweise mit einem Träger des Kraftfahrzeugs verschraubt, verschweißt oder anderweitig verbunden werden. Die Gelenkwelle 10 greift durch eine Öffnung in dem Befestigungsteil 12 hindurch und ist auf der der Außenfläche des Befestigungsteils 12 gegenüberliegenden Innenseite der Antriebseinheit 1 mit einem Flansch 13 festgelegt, so dass die Anhängerkupplung 2 durch den Flansch 13 und den Kopf 6 in Axialrichtung der Gelenkwelle 10 fest an dem Gehäuse 8 der Antriebseinheit 1 befestigt ist.

Zur Abdichtung des Gehäuses 8 ist in dem Kopf 6 der Anhängerkupplung 2 eine Wellendichtung 14 ausgebildet, welche abdichtend an der Außenfläche des Befestigungsteils 12 anliegt und bei der Schwenkbewegung der Anhängerkupplung 2 mit dem Kopf 6 verdreht wird, durch den die Wellendichtung 14 nach außen vor Beschädigungen geschützt ist.

Ferner weist die Antriebseinheit 1 eine Verriegelung 15 auf, welche die Anhängerkupplung 2 bzw. den Kopf 6 der Anhängerkupplung 2 durch Verriegelungsstifte 16 in den Endpositionen der Anhängerkupplung 2, das heißt in deren Betriebsstellung bzw. deren Ruhestellung, verriegeln kann. Dazu greifen die Verriegelungsstifte 16, wie in Fig. 3 dargestellt durch Bohrungen in dem Gehäuse 8 der Antriebseinheit 1 durch und greifen in in dem Kopf 6 ausgebildete Verriegelungsöffnungen ein, so dass sie ein Verdrehen des Kopfes 6 der Anhängerkupplung 2 um die Schwenkachse 7 verhindern. Die Bewegungsrichtung der Verriegelungsstifte 16 sowie deren mit der Bewegungsrichtung zusammenfallende Axialrichtung ist schräg zu der Schwenkachse 7 ausgerichtet, so dass die Verriegelungsstifte 16 und die gesamte Verriegelung 15 im Wesentlichen keine Betriebslast der Anhängerkupplung 2 aufnehmen.

Die Verriegelung 15 in der Antriebseinheit 1 verläuft im Wesentlichen seitlich der Gelenkwelle 10. Eine zweite, symmetrisch aufgebaute Verriegelung ist auf der zweiten Seite der Gelenkwelle 10 vorgesehen, die in der Seitendarstellung der Fig. 3 und 4 jedoch durch die vordere Verriegelung 15 verdeckt ist.

Die Verriegelung 15 weist ein Gestänge 17 auf, das durch eine mit der Antriebswelle 9 fest verbundene Verriegelungsführung 18 betätigt wird. In der dargestellten Ausführungsform ist die Verriegelungsführung 18 als Nutführung ausgebildet, wobei eine sich mit der Antriebswelle 9 drehende Nut 19 einen in der Nut 19 geführten und an dem Gestänge 17 angreifenden Bolzen 20 führt. Dadurch wird eine Bewegung der Verriegelungsstifte 16 in eine Verriegelungsposition (vgl. Fig. 3) bzw. eine Entriegelungsposition (vgl. Fig. 4) geführt.

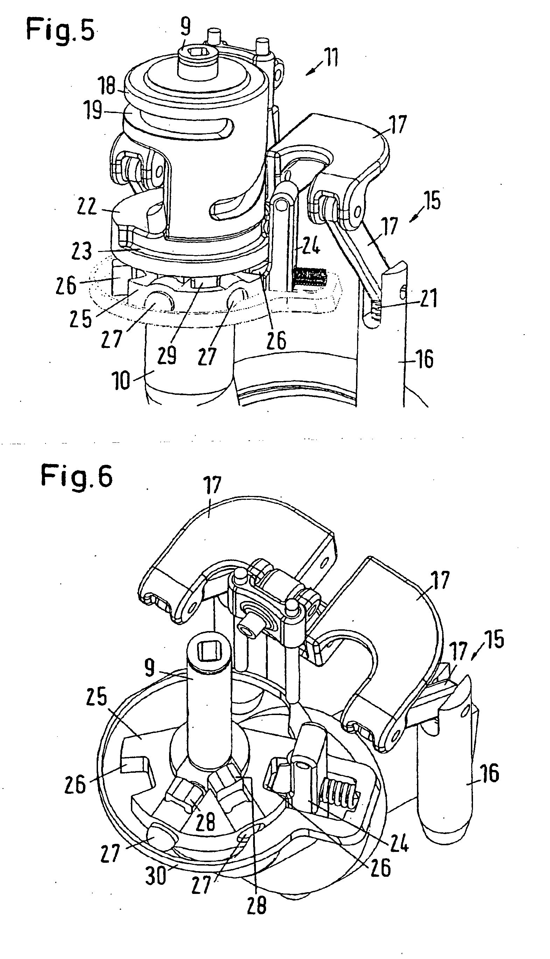

Da in der in Fig. 3 dargestellten verriegelten Position der Verriegelung 15 ein Verdrehen der Anhängerkupplung 2 und damit der Gelenkwelle 10 nicht möglich ist, wird die Gelenkwelle 10 während der Ver- bzw. Entriegelung von der Antriebswelle 9 entkoppelt, so dass durch ein Drehen der Antriebswelle 9 nur die Verriegelungsführung 18 betätigt wird. Das dazu vorgesehene Kopplungssystem11 wird nachfolgend mit Bezug auf die Fig. 5 und 6 näher erläutert.

Fig. 5 zeigt wesentliche Teile des Kopplungssystems 11, welche die Antriebswelle 9 und die Gelenkwelle 10 zur Kraftübertragung auf die Anhängerkupplung 2 miteinander verbindet. Um die Antriebswelle 9 herum und mit dieser fest verbunden ist die Verriegelungsführung 18 mit der Nut 19 vorgesehen, welche die Verriegelung 15 mit dem beidseitig der Welle 10 symmetrisch angeordneten Gestänge 17 sowie den Verriegelungsstiften 16 steuert.

Wie Fig. 5 zu entnehmen, können innerhalb der Verriegelungsstifte 16 Federn 21 vorgesehen sein, um den Verriegelungsstift 16 in Richtung der Verriegelungsposition vorzuspannen und insbesondere bei konisch ausgebildeten Verriegelungsstiften 16 eine formschlüssige Passform in dem Kopf 6 zu erreichen. In einer anderen Ausführungsform der vorliegenden Erfindung kann auf die Feder 21 in den Verriegelungsstiften 16 verzichtet werden, sofern bspw. eine an den Flansch 13 angeschlossene Hülse und/oder die Verriegelungsstifte 16 eine gekrümmte Passung aufweisen, die bei einer minimalen Verdrehung verklemmt.

Das Kopplungssystem 11 schließt auf der der Gelenkwelle 10 zugewandten Seite der Verriegelungsführung 18 mit einem ersten Flansch 22 an, der fest mit der Verriegelungsführung 18 und der Antriebswelle 9 verbunden ist. In dem ersten Flansch 22 ist eine durch eine Ausnehmung am Umfangsrand geformte erste Kurvensteuerung 23 ausgebildet, die auf einen neben dem ersten Flansch 22 in der Antriebseinheit 1 angelenkten Hebel 24 einwirkt. Je nach Position des mit der Antriebswelle 9 verdrehten ersten Flansches 22 drückt die Kurvensteuerung 23 den in Richtung des ersten Flansches 22 vorgespannten Hebel nach außen. In dieser Position gibt der Hebel 24 einen zweiten Flansch 25 des Kopplungssystems 11 frei, der fest mit der Gelenkwelle 10 verbunden ist. Dabei wird der Hebel 24 aus in dem zweiten Flansch 25 vorgesehenen Einkerbungen 26, herausgedrückt, so dass der zweite Flansch 25 und damit die Gelenkwelle 10 zur Drehung freigegeben werden.

Zusätzlich sind in dem zweiten Flansch 25 in Radialrichtung verschiebbare Mitnehmer 27 vorgesehen, die einen von der Seitenfläche des Flansches 25 vorstehenden Anschlag 28 aufweisen (vgl. Fig. 6) und mit einem an dem ersten Flansch 22 ausgebildeten Vorsprung 29 (vgl. Fig. 5) zusammenwirken, um eine Drehbewegung der Antriebswelle 9 auf die Gelenkwelle 10 zu übertragen. Die Mitnehmer 27 werden in dem zweiten Flansch 25 durch eine den zweiten Flansch 25 umgebende zweite Kurvensteuerung 30 derart gesteuert, dass die Anschläge 28 der Mitnehmer 27 mit dem Vorsprung 29 solange in Wirkverbindung stehen, solange die Anhängerkupplung 2 zwischen der Betriebsstellung und der Ruhestellung verschwenkt wird. Nach Erreichen der jeweiligen Endposition drückt die Kurvensteuerung 30 die Mitnehmer 27 mit dem Anschlag 28 radial gegen Federn nach innen, so dass der Vorsprung 29 des ersten Flansches 22 an den Anschlägen 28 vorbei drehen kann. In dieser Position ist dann auch der Hebel 24 wieder in die Einkerbung 26 des zweiten Flansches 25 eingerastet, so dass der Hebel 24 als Drehsperre wirkt und die Anhängerkupplung 2 durch ein Verdrehen der Antriebswelle 9 nicht mehr weiter gedreht wird. Der Hebel 24 bildet damit eine zweite Verriegelung der Anhängerkupplung 2, die in dem Kopplungssystem 11 ausgebildet ist.

Das Weiterdrehen der Antriebswelle 9 bewirkt dann noch die zuvor beschriebene Verriegelung 15 der Anhängerkupplung 2 in ihren jeweiligen Endstellungen.

Um eine Feinpositionierung der Anhängerkupplung 2 relativ zu dem Gehäuse 8 der Antriebseinheit 1 zu erreichen, ist in dem Kopf 6 der Anhängerkupplung 2 eine federvorgespannte Kugel 31 vorgesehen (vgl. Fig. 3 und 4), die mit einer entsprechenden kugelförmigen Ausnehmung in der äußeren Oberfläche des Gehäuses 8 der Antriebseinheit 1 zusammenwirkt und ein mögliches Spiel in der Gelenkwelle 10 ausgleicht, bevor die Verriegelungsstifte 16 in den Kopf 6 der Anhängerkupplung 2 eingeführt werden.

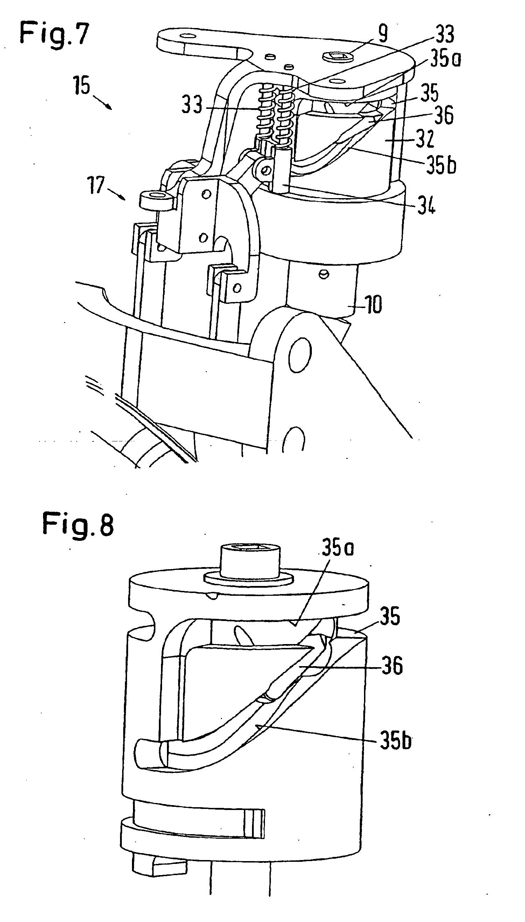

In den Fig. 7 und 8 ist eine von der in den Fig. 3 und 4 dargestellten Verriegelungsführung 18 verschiedene Verriegelungsführung 32 dargestellt, in der die Verriegelungsstifte 16 durch in dem Gestänge 17 wirkende Federn 33 in der Verrieglungsrichtung vorgespannt sind. Die Federn 33 greifen dazu an dem Führungselement 34 an, dessen nicht dargestellter Bolzen in der Nut 35 der Verriegelungsführung 34 geführt wird.

Die Nut 35 ist im Bereich der Verstellung zwischen der verriegelten Position (in Fig. 7 dargestellt) und der entriegelten Position in verzweigte Nutbereiche 35a und 35b aufgeteilt, deren Funktionsweise im Zusammenwirken mit den Federn 33 nachfolgend beschrieben wird. Die beiden Nutbereiche 35a und 35b werden durch eine bspw. federvorgespannte Weiche 36 entsprechend angesteuert.

In der entriegelten Position der Verriegelung 15 befindet sich das befindet sich der Bolzen und das Führungselement 34 an einer der Antriebswelle 9 zugewandten, in der Darstellung der Fig. 7 und 8 oberen Position der Nutführung 32. Die Weiche 36 ist wie in Fig. 7 dargestellt vorgespannt und gibt die Nut 35a frei, die während des Verdrehens der Antriebswelle 10 mit der Nutführung 32 zunächst parallel zu dem Rand der Nutführung 32 verläuft. Während das Führungselement 34 in diesem Nutbereich 35a befindet, wird das Gestänge 17 der Verriegelung 15 nicht bewegt, bis das Führungselement 34 den ich Axialrichtung der Antriebswelle 9 verlaufenden Abschnitt des Nutbereichs 35a erreicht. In diesem Bereich bewirken die Federn 33, dass das Führungselement 34 in Richtung der Welle 10 gedrückt wird, um dabei die Verriegelungsstifte in den Kopf der Anhängerkupplung einzufahren und diesen zu verriegeln. In dieser Position ist die Verriegelung in Fig. 7 dargestellt.

Zur Entriegelung der Anhängerkupplung 2 wird die Antriebswelle 9 mit der Nutführung 32 in die entgegengesetzte Richtung gedreht. Dabei folgt der nicht darstellte Bolzen des Führungselements 34 nun dem Nutbereich 35b, der schräg zu dem stirnseitigen Rand der Nutführung 32 verläuft. Dadurch wird die Feder 33 durch das Führungselement 34 gegen ihren gegenüberliegenden Anschlag vorgespannt und das Führungselement mit der Drehung der Antriebswelle 9 von der der Welle 10 der Nutführung 32 zugewandten Seite wegbewegt. Dabei wird das Gestänge 17 derart mitbewegt, dass die Verriegelungsstifte aus der Verriegelungs- und die Entriegelungsposition überführt werden.

Die Weiche 36 wird dabei, wie in Fig. 8 dargestellt, durch den Bolzen des Führungselements geöffnet und nach dessen Durchtritt durch den Weichenbereich aufgrund der Federvorspannung wieder in die in Fig. 7 gezeigte Position zurückgestellt. Durch diese Art der Verriegelung wird ein abruptes Verriegeln der Verriegelungsstifte ermöglicht.

Das gesamte Gehäuse 8 der Antriebseinheit 1 von dem in der Zeichnung lediglich das die Betriebslast der Anhängerkupplung 2 aufnehmende Befestigungsteil 12 abgebildet ist, kann beispielsweise durch eine Kunststoffummantelung gebildet sein, die an dem Befestigungsteil 12 oder anderen geeigneten Haltemitteln angreift und den gesamten Antriebsmechanismus umgibt, der auf diese Weise zusammen mit der Wellendichtung 14 sicher abgedichtet ist.

Der in der erfindungsgemäßen Antriebseinheit 1 vorgeschlagene Antriebsmechanismus mit einer flexiblen, insbesondere als Gelenkwelle 10 ausgebildeten Welle zur Übertragung einer Drehbewegung auf die Anhängerkupplung 2 und die Verriegelung 15, welche beide gemeinsam durch die Antriebswelle 9 angetrieben werden, wird eine sehr kompakte Antriebseinrichtung 1 vorgeschlagen, die gleichermaßen manuell und elektromotorisch angetrieben werden kann. Dabei ist es besonders vorteilhaft, dass der Antriebsmechanismus und auch der Verriegelungsmechanismus keine Betriebslast der Anhängerkupplung aufnehmen muss, da diese über ein Befestigungsteil 12 abgefangen wird, an dem die Anhängerkupplung 2 derart festgelegt ist, dass eine axiale Verschiebung der Anhängerkupplung 2 nicht möglich ist, diese jedoch um die Drehachse 7 gedreht werden kann.

### Bezugszeichenliste:

- 1: Antriebseinheit
- 2: Anhängerkupplung
- 3: Kugelstange
- 4: Stoßfänger
- 5: Kupplungskugel
- 6: Kopf
- 7: Schwenkachse
- 8: Gehäuse
- 9: Antriebswelle
- 10: Welle zur Kraftübertragung, Gelenkwelle
- 11: Kopplungssystem
- 12: Befestigungsteil
- 13: Flansch
- 14: Wellendichtung
- 15: Verriegelung
- 16: Verriegelungsstift
- 17: Gestänge
- 18: Verriegelungsführung
- 19: Nut
- 20: Bolzen
- 21: Feder
- 22: erster Flansch des Kopplungssystems
- 23: erste Kurvensteuerung
- 24: Hebel, zweite Verriegelung
- 25: zweiter Flansch des Kopplungssystems
- 26: Einkerbung

- 27: Mitnehmer
- 28: Anschlag
- 29: Vorsprung
- 30: zweite Kurvensteuerung
- 31: federvorgespannte Kugel
- 32: Verriegelungsführung
- 33: Kugel
- 34: Führungselement
- 35: Nut
- 35a, 35b: Nutbereiche
- 36: Weiche

## Patentansprüche

1. Antriebseinheit für eine Anhängerkupplung (2) mit einer um eine Schwenkachse (7) zwischen einer Betriebsstellung und einer Ruhestellung verschwenkbaren Kugelstange (3), wobei die Anhängerkupplung (2) ausschließlich durch die Schwenkbewegung um die Schwenkachse (7) verstellt wird und der Winkel der Schwenkachse so eingerichtet ist, dass die in der Regel in der Grundform U-förmig gebogene Kugelstange (3) während der Schwenkbewegung unter einem Stoßfänger hindurchtaucht_{,} und die Antriebseinheit (1) über eine Antriebswelle (9) antreibbar ist, wobei die Antriebswelle (9) und die Schwenkachse (7) winklig zueinander angeordnet sind, und die Antriebseinheit (1) eine Verriegelung (15) der Anhängerkupplung (2) aufweist, welche in der verriegelten Stellung in einen an der Antriebseinheit (1) angeordneten Kopf (6) der schwenkbaren Kugelstange (3) eingreift, wobei die Verriegelung (15) mindestens einen Verriegelungsstift (16) aufweist,
**dadurch gekennzeichnet, dass** die Verriegelung (15) zwei Verriegelungsstifte (16) aufweist, dass die Verriegelungsstifte (16) in den Kopf (6) der Kugelstange (3) einführbar sind, und dass die Verriegelungsstifte (16) und die Schwenkachse (7) winklig zueinander angeordnet sind.

2. Antriebseinheit nach Anspruch 1, **dadurch gekennzeichnet, dass** ein Verriegelungsstift (16) in seiner Axialrichtung bewegbar ausgebildet ist und seine Bewegungsrichtung zu der Schwenkachse (7) winklig ist.

3. Antriebseinheit nach einem der vorhergehenden Ansprüche, **dadurch gekennzeichnet, dass** die Verriegelung (15) durch die Antriebswelle (9) betätigbar ist.

4. Antriebseinheit nach einem der vorhergehenden Ansprüche, **dadurch gekennzeichnet, dass** ein Verriegelungsstift (16) durch ein Gestänge (17) mit Knebeln verschiebbar ist.

5. Antriebseinheit nach einem der vorhergehenden Ansprüche, **dadurch gekennzeichnet, dass** ein Verriegelungsstift (16) in der Verriegelungsrichtung durch eine Feder (33) vorgespannt ist.

6. Antriebseinheit nach einem der vorhergehenden Ansprüche, **dadurch gekennzeichnet, dass** die Antriebswelle (9) und die Schwenkachse (7) mittels eines Kupplungssystems (11) entkoppelbar ausgebildet sind.

7. Antriebseinheit nach Anspruch 6, **dadurch gekennzeichnet, dass** das Kopplungssystem (11) eine zweite Verriegelung (24) aufweist.

8. Antriebseinheit nach einem der vorhergehenden Ansprüche, **dadurch gekennzeichnet, dass** in der Antriebseinheit (1) eine Welle (10) zur Kraftübertragung auf die Anhängerkupplung (2) vorgesehen ist, wobei die Welle eine Gelenkwelle (10) oder eine biegsame Welle ist.

9. Antriebseinheit nach Anspruch 8, **dadurch gekennzeichnet, dass** die Antriebswelle (9) mit der Welle (10) zur Kraftübertragung entkoppelbar ausgebildet ist.

10. Antriebseinheit nach einem der vorhergehenden Ansprüche, **dadurch gekennzeichnet, dass** die Kugelstange (3) um die Schwenkachse (7) drehbar an dem Gehäuse (8) der Antriebseinheit (1) befestigt ist.

11. Antriebseinheit nach einem der vorhergehenden Ansprüche, **dadurch gekennzeichnet, dass** die Welle (10) zur Kraftübertragung und/oder die Verriegelung (15) in einem abgedichteten Gehäuse angeordnet sind.

12. Antriebseinheit nach einem der vorhergehenden Ansprüche, **dadurch gekennzeichnet, dass** die Kugelstange (3) an der Antriebseinheit (1) mit einer Wellendichtung (14) abgedichtet ist.

13. Antriebseinheit nach einem der vorhergehenden Ansprüche, **dadurch gekennzeichnet, dass** die Antriebswelle (9) manuell oder elektromotorisch antreibbar ist.

## Claims

1. Drive unit for a trailer coupling (2) with a ball bar (3) pivotable about a pivot axis (7) between an operating position and a rest position, wherein the trailer coupling (2) is adjusted solely by way of the pivoting movement about the pivot axis (7) and the angle of the pivot axis is set such that the ball bar (3) normally bent in a U shape in the basic form dips beneath a bumper during the pivoting movement and the drive unit (1) is driveable via a drive shaft (9), wherein the drive shaft (9) and the pivot axis (7) are arranged at an angle to one another, and the drive unit (1) has a locking device (15) of the trailer coupling (2) engaging in a head (6) of the pivotable ball bar (3) in the locked position, said head being arranged on the drive unit (1), wherein the locking device (15) has at least one locking pin (16), **characterized in that** the locking device (15) has two locking pins (16), that the locking pins (16) are insertable into the head (6) of the ball bar (3) and that the locking pins (16) and the pivot axis (7) are arranged at an angle to one another.

2. Drive unit as defined in claim 1, **characterized in that** one locking pin (16) is designed to be movable in its axial direction and its direction of movement is at an angle to the pivot axis (7).

3. Drive unit as defined in any one of the preceding claims, **characterized in that** the locking device (15) is actuatable by the drive shaft (9).

4. Drive unit as defined in any one of the preceding claims, **characterized in that** one locking pin (16) is movable by means of a rod system (17) with levers.

5. Drive unit as defined in any one of the preceding claims, **characterized in that** one locking pin (16) is pretensioned by a spring (33) in the locking direction.

6. Drive unit as defined in any one of the preceding claims, **characterized in that** the drive shaft (9) and the pivot axis (7) are designed to be uncouplable by means of a coupling system (11).

7. Drive unit as defined in claim 6, **characterized in that** the coupling system (11) has a second locking device (24).

8. Drive unit as defined in any one of the preceding claims, **characterized in that** a shaft (10) for the transmission of power to the trailer coupling (2) is provided in the drive unit (1), wherein the shaft is a universal shaft (10) or a flexible shaft.

9. Drive unit as defined in claim 8, **characterized in that** the drive shaft (9) with the shaft (10) for the transmission of power is designed to be uncouplable.

10. Drive unit as defined in any one of the preceding claims, **characterized in that** the ball bar (3) is attached to the housing (8) of the drive unit (1) so as to be rotatable about the pivot axis (7).

11. Drive unit as defined in any one of the preceding claims, **characterized in that** the shaft (10) for the transmission of power and/or the locking device (15) are arranged in a sealed housing.

12. Drive unit as defined in any one of the preceding claims, **characterized in that** the ball bar (3) is sealed on the drive unit (1) with a shaft seal (14).

13. Drive unit as defined in any one of the preceding claims, **characterized in that** the drive shaft (9) is drivable manually or by an electric motor.

## Revendications

1. Ensemble d'entraînement pour un attelage de remorque (2), avec une barre d'attelage à boule (3) capable de pivoter autour d'un axe de pivotement (7), entre une position de fonctionnement et une position de repos, l'attelage de remorque (2) étant déplacé exclusivement par le mouvement de pivotement autour de l'axe de pivotement (7) et l'angle de l'axe de pivotement étant configuré de telle manière que la barre d'attelage à boule (3) courbée de manière à présenter en règle générale une forme de base en forme de U s'enfonce, au cours du mouvement de pivotement, sous un pare-chocs, et l'ensemble d'entraînement (1) pouvant être entraîné par un arbre d'entraînement (9), l'arbre d'entraînement (9) et l'axe de pivotement (7) étant montés de façon à former un angle entre eux, et l'ensemble d'entraînement (1) comportant un moyen de verrouillage (15) de l'attelage de remorque (2), qui, en position de verrouillage, s'engage dans une tête (6), qui est montée sur l'ensemble d'entraînement (1), de la barre d'attelage à boule (3) pouvant pivoter, le moyen de verrouillage (15) comportant au moins une tige de verrouillage (16),
**caractérisé en ce que** le moyen de verrouillage (15) comporte deux tiges de verrouillage (16), **en ce que** les tiges de verrouillage (16) peuvent être introduites dans la tête (6) de la barre d'attelage à boule (3), et **en ce que** les tiges de verrouillage (16) et l'axe de pivotement (7) sont montés de façon à former un angle entre eux.

2. Ensemble d'entraînement selon la revendication 1, **caractérisé en ce qu'**une tige de verrouillage (16) est conçue de manière déplaçable dans son sens axial, et **en ce que** son sens de déplacement forme un angle par rapport à l'axe de pivotement (7).

3. Ensemble d'entraînement selon l'une des revendications précédentes, **caractérisé en ce que** le moyen de verrouillage (15) peut être actionné à l'aide de l'arbre d'entraînement (9).

4. Ensemble d'entraînement selon l'une des revendications précédentes, **caractérisé en ce qu'**une tige de
verrouillage (16) peut être déplacée à l'aide d'un système de tiges (17) avec des poignées.

5. Ensemble d'entraînement selon l'une des revendications précédentes, **caractérisé en ce qu'**une tige de verrouillage (16) est précontrainte par un ressort (33) dans le sens de verrouillage.

6. Ensemble d'entraînement selon l'une des revendications précédentes, **caractérisé en ce que** l'arbre d'entraînement (9) et l'axe de pivotement (7) sont conçus de façon à pouvoir être désaccouplés au moyen d'un système d'accouplement (11).

7. Ensemble d'entraînement selon la revendication 6, **caractérisé en ce que** le système d'accouplement (11) comporte un deuxième moyen de verrouillage (24).

8. Ensemble d'entraînement selon l'une des revendications précédentes, **caractérisé en ce qu'**un arbre (10) est prévu dans l'ensemble d'entraînement (1) pour la transmission de puissance vers l'attelage de remorque (2), l'arbre étant un arbre articulé (10) ou un arbre flexible.

9. Ensemble d'entraînement selon la revendication 8, **caractérisé en ce que** l'arbre d'entraînement (9) est conçu de manière à pouvoir être désaccouplé de l'arbre (10) destiné à la transmission de puissance.

10. Ensemble d'entraînement selon l'une des revendications précédentes, **caractérisé en ce que** la barre d'attelage à boule (3) est fixée au boîtier (8) de l'ensemble d'entraînement (1), de manière rotative autour de l'axe de pivotement (7).

11. Ensemble d'entraînement selon l'une des revendications précédentes, **caractérisé en ce que** l'arbre (10) destiné à la transmission de puissance et/ou le moyen de verrouillage (15) sont montés dans un boîtier étanche.

12. Ensemble d'entraînement selon l'une des revendications précédentes, **caractérisé en ce que** la barre d'attelage à boule (3) sur l'ensemble d'entraînement (1) est rendue étanche au moyen d'une garniture d'étanchéité d'arbre (14).

13. Ensemble d'entraînement selon l'une des revendications précédentes, **caractérisé en ce que** l'arbre d'entraînement (9) peut être entraîné manuellement ou de façon électromotrice.
